# EUROPÄISCHE PATENTSCHRIFT

(11) **EP 3 992 474 B1**
(45) Veröffentlichungstag und Bekanntmachung des Hinweises auf die Patenterteilung: **06.11.2024**
(21) Anmeldenummer: 21203180.1
(22) Anmeldetag: 18.10.2021
(51) Int. Cl.: F16B 12/40, A47B 13/06

(54) **ANORDNUNG AUS WENIGSTENS ZWEI WINKLIG MITEINANDER VERBUNDENEN RUNDROHRPROFILEN**
ARRANGEMENT COMPRISING AT LEAST TWO ANGULARLY INTERCONNECTED TUBULAR PROFILES
ENSEMBLE D'AU MOINS DEUX PROFILÉS TUBULAIRES RONDS RELIÉS DE MANIÈRE ANGULAIRE

(30) Priorität: 03.11.2020 DE 202020106291 U
(43) Veröffentlichungstag der Anmeldung: 04.05.2022
(73) Patentinhaber: Sedus Systems GmbH, 59590 Geseke (DE)
(72) Erfinder: Wibbeke, Alfred, 59590 Geseke (DE); Bohnet, Jens, 79761 Waldshut-Tiengen (DE)
(74) Vertreter: Meinke, Jochen

(56) Entgegenhaltungen:
- AU-B2- 429 630
- FR-A1- 2 590 333

## Beschreibung

Die Erfindung betrifft eine Anordnung aus wenigstens zwei winklig miteinander verbundenen Rundrohrprofilen mit den Merkmalen des Oberbegriffes des Patentanspruches 1.

In verschiedenen Anwendungsfällen besteht die Notwendigkeit, an einem Rundrohrprofil ein weiteres Rundrohrprofil zu befestigen. So ist es häufig erforderlich, ein erstes Rundrohrprofil mit einem zweiten Rundrohrprofil zu verbinden, das rechtwinklig zum ersten Rundrohrprofil angeordnet ist. Zu diesem Zweck sind T-förmige Rohrverbinder bekannt.

Mit einem solchen, z.B. aus DE 90 00 045 U1 bekannten T-förmigen Rohrverbinder lässt sich eine Anordnung aus zwei miteinander winklig verbundenen Rundrohrprofilen realisieren. Ein solcher T-förmiger Rohrverbinder weist ein Klemmelement auf, welches das eine Rundrohrprofil umfänglich umschließt, wozu das Klemmelement einen ringförmigen, geschlitzten, am Rundrohrprofil anliegenden Bereich aufweist, wobei der ringförmige Bereich beidseitig angrenzend an den Schlitz jeweils in einen Klemmschenkel übergeht. Diese beiden Klemmschenkel sind so ausgeformt, dass sie quer zur Längsachse des ringförmigen Bereiches einen von außen zugänglichen, zylinderförmigen Aufnahmeraum bilden, in welchen das zweite Rundrohrprofil eingesteckt werden kann. In den beiden Klemmschenkeln ist jeweils wenigstens eine Bohrung vorgesehen, in welche eine Spannschraube eingeschraubt werden kann. Durch das Einschrauben der Spannschraube klemmt einerseits der ringförmige Bereich am ersten Rundrohrprofil und andererseits werden die Klemmschenkel zusammengedrückt, so dass sich das Volumen des Aufnahmeraumes verringert und die Wandungen des Aufnahmeraumes klemmend am zweiten Rundrohrprofil anliegen.

Solche Rohrverbinder benötigen jedoch einen zusätzlichen Bauraum, der bei manchen Anwendungen nicht zur Verfügung steht, z.B. wenn die Rundrohrprofile direkt an einer Fläche, z.B. an der Unterseite einer Tischplatte, befestigt werden sollen. Bei Verwendung eines solchen Rohrverbinders liegt das jeweilige Rundrohrprofil dann nicht direkt an der Fläche an, sondern ist von dieser durch den umgebenden Rohrverbinder beabstandet. Außerdem sind solche Rohrverbinder optisch wenig ansprechend.

Aus DE 29 40 915 A1 sind Gegenstände, wie Tische, Bänke, Regale, Gerüste, Geländer und Rahmenkonstruktionen oder dergl. bekannt, die aus mehreren vierkantförmigen Einzelelementen, wie Pfosten, Beinen, Stangen, Leisten, Querrippen und/oder Platten oder dergl. zusammengefügt sind, wobei Verbindungen zwischen den Einzelelementen mit jeweils mindestens einer Gewindeverbindung und jeweils mindestens zwei Führungselementen vorgesehen sind, die im Bereich der Stoßstelle zwischen den Einzelelementen mit Vorsprüngen und Ausnehmungen ineinandergreifen. Dabei besteht jedes Führungselement aus einem an einem der zu verbindenden Einzelelemente befestigten Führungsstift und einem in dem anderen Einzelelement ausgebildeten Loch, wobei die Gewindeverbindung eine in dem einen Einzelelement verankerte Gewindemutter aufweist, in die ein durch Ausnehmungen in dem anderen Einzelelement einführbarer Gewindebolzen einschraubbar ist, dessen Kopf sich über eine Distanzscheibe an dem zuletzt genannten Einzelelement abstützt.

Aus AU 429 630 B2 ist eine aus wenigstens zwei winklig miteinander verbundenen Rundrohrprofilen bestehende Anordnung mit den Merkmalen des Oberbegriffes des Patentanspruches 1 bekannt. Dabei weisen die Rohrprofile bevorzugt einen quadratischen Querschnitt mit abgerundeten Ecken auf, so dass der Verbindungsbereich des zweiten Rohrprofils ebenflächig ausgebildet ist. Aus FR 2 590 333 A1 ist eine weitere Anordnung zur Verbindung von Rohrprofilen bekannt.

Aufgabe der Erfindung ist es, eine Möglichkeit zu schaffen, mit der wenigstens zwei Rundrohrprofile raumsparend winklig, vorzugsweise rechtwinklig, miteinander verbunden werden können.

Diese Aufgabe wird bei einer Anordnung der eingangs bezeichneten Art erfindungsgemäß dadurch gelöst, dass die Anlagefläche des jeweiligen Steges als abgeschrägte Stirnfläche ausgebildet ist und dass die abgeschrägten Stirnflächen zweier benachbarter Stege in Einsteckrichtung gesehen eine umgekehrte V-Form bilden, wodurch das Aufspreizen des ersten Rundrohrprofiles verhindert wird.

Bei einer solchen Anordnung aus wenigstens zwei Rundrohrprofilen sind keine die zu verbindenden Rundrohrprofile nach außen überragende Elemente erforderlich, so dass die Rundrohrprofile abstandsfrei an einer Fläche oder dgl. anliegen können. Die Verbindung wird im Wesentlichen ohne zusätzliche Elemente durch die komplementäre Gestaltung der Rundrohrprofile selbst bereitgestellt. Die Rundrohrprofile sind dadurch raumsparend und nahezu unsichtbar miteinander verbunden. Die Stege greifen im Wesentlichen formschlüssig in die Aufnahmeöffnungen ein. Die Anlagefläche des jeweiligen Steges ist dabei als abgeschrägte Stirnfläche ausgebildet, und zwar derart, dass die abgeschrägten Stirnflächen zweier benachbarter Stege in Einsteckrichtung gesehen eine umgekehrte V-Form bilden. Diese Anlageflächen fixieren das erste Rundrohrprofil an diesen Stellen und verhindern ein Aufspreizen des ersten Rundrohrprofils.

Vorteilhaft ist das freie Ende des ersten Rundrohrprofils angrenzend an die Stege so ausgebildet ist, dass in Montagelage zwischen dem freien Ende und dem zweiten Rundrohrprofil ein Spalt besteht, wobei das freie Ende des ersten Rundrohrprofils angrenzend an die Stege komplementär zum zweiten Rundrohrprofil halbkreisförmig ausgebildet sein kann. Das ist optisch vorteilhaft, allerdings ist die Gestaltung der Anlageflächen der Stege so, dass ein Spalt besteht, so dass keine bündige Anlage entsteht, sondern die Verbindung nur über die Stege und die Aufnahmeöffnungen erfolgt, die durch die Verbindungsschraube gegeneinandergedrückt werden. Die Form des Spaltes kann unterschiedlich sein. Der Spalt kann alternativ auch entfallen.

Nach einer ersten Ausgestaltung ist vorgesehen, dass die zweite Bohrung mit dem Innengewinde versehen ist und im ersten Rundrohrprofil angrenzend an den Quersteg eine Einführöffnung für die Verbindungsschraube ausgebildet ist. Die Verbindungsschraube wird durch die Einführöffnung und die Öffnung im Quersteg hindurchgesteckt und in das Innengewinde des zweiten Rundrohrprofils eingeschraubt.

Nach einer zweiten Ausgestaltung ist alternativ vorgesehen, dass die erste Bohrung mit dem Innengewinde versehen und die zweite Bohrung im zweiten Rundrohrprofil als Durchgangsbohrung ausgebildet ist. Die Verbindungsschraube wird bei dieser Ausgestaltung in die Durchgangsbohrung eingesteckt und in das Innengewinde im Quersteg des ersten Rundrohrprofils eingeschraubt.

Dabei ist weiterhin vorteilhaft vorgesehen, dass das Innengewinde von einer in die erste oder zweite Bohrung eingesetzten Gewindebuchse gebildet ist. Als Gewindebuchse kann ein Standardbauteil verwendet werden. Alternativ kann das Innengewinde natürlich integral eingeformt sein.

Die Erfindung betrifft auch ein Möbelstück mit wenigstens einer vorbeschriebenen Anordnung. Dieses Möbelstück kann z.B. ein Tisch sein, wobei die Rundrohrprofile das Tischgestell für die Tischplatte bilden.

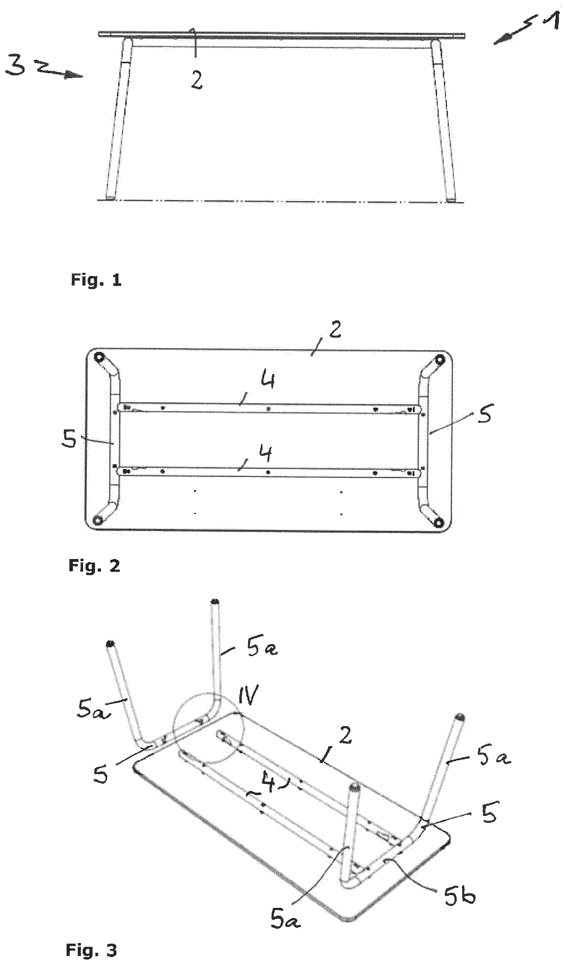

Die Erfindung ist nachstehend anhand der Zeichnung beispielhaft näher erläutert. Diese zeigt in
- Fig. 1: eine Seitenansicht eines Tisches mit einer erfindungsgemäßen, das Tischgestell bildenden Anordnung,
- Fig. 2: eine Ansicht von unten auf den Tisch,
- Fig. 3: eine perspektivische Explosionsdarstellung des Tisches von unten,

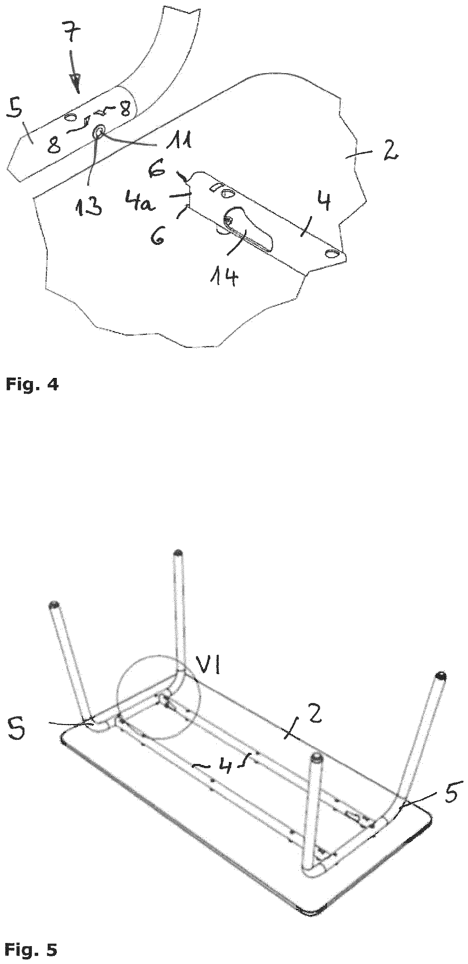

- Fig. 4: ein vergrößertes Detail IV in Fig. 3,
- Fig. 5: eine perspektivische Ansicht des Tisches von unten,

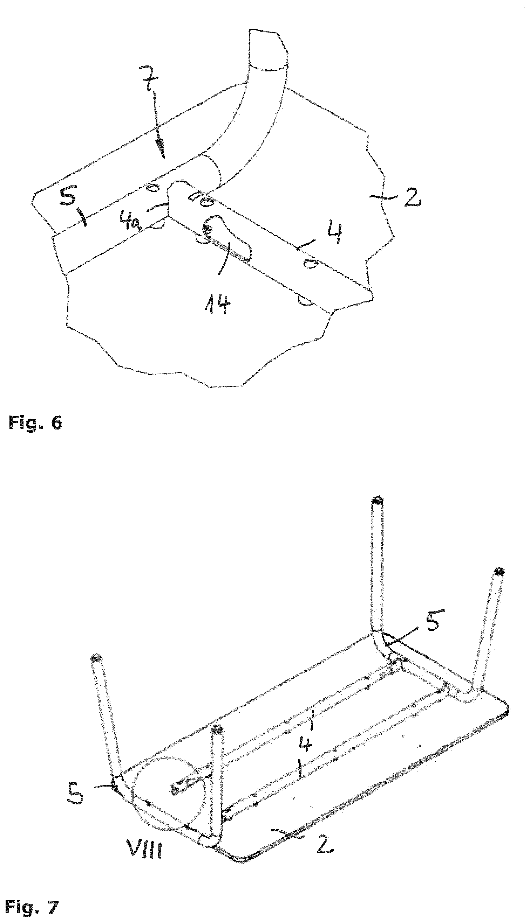

- Fig. 6: ein vergrößertes Detail VI in Fig. 5,
- Fig. 7: eine perspektivische Explosionsdarstellung des Tisches von unten,

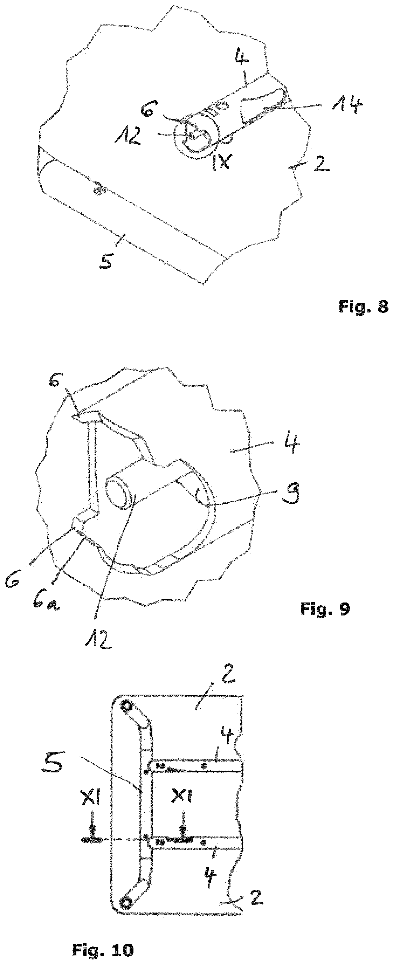

- Fig. 8: ein vergrößertes Detail VIII in Fig. 7,
- Fig. 9: ein vergrößertes Detail IX in Fig. 8,
- Fig. 10: eine Teilansicht des Tisches von unten,
- Fig. 11: einen Schnitt gemäß der Linie XI-XI in Fig. 10,
- Fig. 12: ein vergrößertes Detail der Fig. 11 bei der Montage und
- Fig. 13: das Detail nach Fig. 12 nach der Montage.

Ein Tisch 1 weist eine Tischplatte 2 und ein Tischgestell 3 auf, welches beim Ausführungsbeispiel von zwei ersten Rundrohrprofilen 4 und zwei zweiten Rundrohrprofilen 5 gebildet ist Die beiden ersten Rundrohrprofile 4 sind parallel zueinander und parallel zur Längsseite der Tischplatte 2 angeordnet und an der Unterseite der Tischplatte 2 befestigt, vorzugsweise angeschraubt.

Die beiden zweiten Rundrohrprofile 5 sind U-förmig gestaltet, wobei die U-Schenkel 5a die Tischbeine bilden. Der jeweilige stegförmige Bereich 5b liegt an der Unterseite der Tischplatte 2 an und ist an dieser befestigt, z.B. ebenfalls durch Verschrauben.

Wesentlich für die Erfindung ist nun die Verbindung der ersten und zweiten Rundrohrprofile 4, 5, die nachfolgend näher beschreiben wird.

Diese Verbindung wird nämlich von einer erfindungsgemäßen Anordnung gebildet, die bei diesem Ausführungsbeispiel somit vier miteinander verbundene Rundrohrprofile aufweist, nämlich zwei erste Rundrohrprofile 4 und zwei zweite Rundrohrprofile 5.

An wenigstens einem Ende, beim Ausführungsbeispiel an beiden Enden des jeweiligen ersten Rundrohrprofiles 4 sind mehrere, vorzugsweise vier über das freie Ende 4a hervorragende Stege 6 ausgebildet. Zur nachfolgend näher beschriebenen Aufnahme dieser Stege 6 in das zugeordnete zweite Rundrohrprofil 5 weist das jeweilige zweite Rundrohrprofil 5 im Stegbereich 5b wenigstens einen, beim dargestellten Ausführungsbeispiel jeweils zwei, Verbindungsbereiche 7 auf. In diesem jeweiligen Verbindungsbereich 7 sind mehrere mit den Stegen 6 fluchtende Aufnahmeöffnungen 8 ausgespart.

Angrenzend an das freie Ende 4a des ersten Rundrohrprofiles 4 ist innerhalb des ersten Rundrohrprofiles 4 ein Quersteg 9 mit einer konzentrisch zur Längsachse des ersten Rundrohrprofiles 4 angeordneten ersten Bohrung 10 angeordnet. Im jeweiligen Verbindungsbereich 7 des zweiten Rundrohrprofiles 5 ist eine mit der ersten Bohrung 10 fluchtende zweite Bohrung 11 ausgespart. Dabei ist die erste Bohrung 10 oder die zweite Bohrung 11 mit einem Innengewinde für eine durch die zweite Bohrung 11 oder die erste Bohrung 10 einführbare Verbindungsschraube 12 vorgesehen.

Beim dargestellten Ausführungsbeispiel ist die zweite Bohrung 11 mit dem Innengewinde versehen, welches von einer in die zweite Bohrung 11 eingesetzten Gewindebuchse 13 gebildet ist.

Um die Verbindungsschraube 12 durch die erste Bohrung 10 im ersten Rundrohrprofil 4 einfädeln zu können, ist im ersten Rundrohrprofil 4 angrenzend an den Quersteg 9 eine Einführöffnung 14 ausgespart.

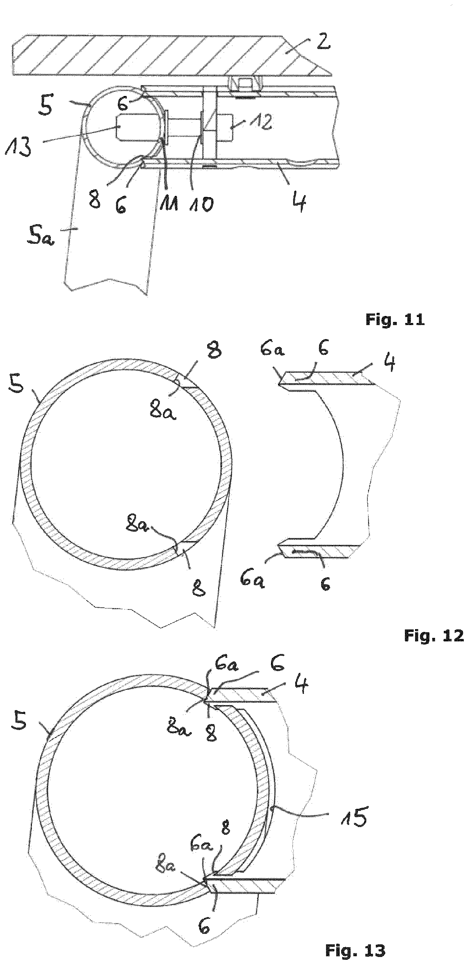

Die vier Stege 6 und die damit korrespondierenden Aufnahmeöffnungen 8 weisen zueinander komplementäre Anlageflächen 6a, 8a auf. Die Anlagefläche 6a des jeweiligen Steges 6 ist dabei als abgeschrägte Stirnfläche ausgebildet (Fig. 12 und 13), und zwar derart, dass die abgeschrägten Stirnflächen zweier benachbarter Stege 6 in Einsteckrichtung gesehen eine umgekehrte V-Form bilden. Diese Anlageflächen 6a, 8a fixieren das erste Rundrohrprofil 4 an diesen Stellen und verhindern ein Aufspreizen des ersten Rundrohrprofils 4.

Außerdem ist vorgesehen, dass das freie Ende 4a des jeweiligen ersten Rundrohrprofiles 4 angrenzend an die Stege 6 so ausgebildet ist, so dass in Montagelage das freie Ende 4a mit einem Spalt 15 (Fig. 13) an der Zylindermantelfläche des zweiten Rundrohrprofiles 5 anliegt. Das freie Ende 4a kann z.B. komplementär zum zweiten Rundrohrprofil 5 halbkreisförmig ausgebildet sein, aber es kann auch eine andere Form aufweisen. Der Spalt 15 kann alternativ auch entfallen. Zur rechtwinkligen Verbindung des freien Endes 4a eines ersten Rundrohrprofiles 4 mit dem zweiten Rundrohrprofil 5 wird das freie Ende 4a des jeweiligen ersten Rundrohrprofiles 4 mit den Stegen 6 in die Aufnahmeöffnungen 8 am zugeordneten Verbindungsbereich 7 des zweiten Rundrohrprofiles 5 eingesteckt. Anschließend wird die Verbindungsschraube 12 eingeschraubt, so dass eine form- und kraftschlüssige Verbindung im Bereich der Anlageflächen 6a, 8a ohne nach außen hervorstehende Elemente erzeugt wird.

Anders als dargestellt, kann das Innengewinde auch in der ersten Bohrung 10 im Quersteg 9 des ersten Rundrohrprofiles 4 ausgebildet sein. In diesem Falle entfällt dann die Einführöffnung 14 im ersten Rundrohrprofil. Stattdessen ist die zweite Bohrung 11 im zweiten Rundrohrprofil 5 dann als Durchgangsbohrung ausgebildet, so dass die Verbindungsschraube 12 von außen in das zweite Rundrohrprofil 5 eingesteckt und eingeschraubt werden kann.

Beim dargestellten Ausführungsbeispiel der Anordnung als Tischgestell 3 eines Tisches 1 sind an beiden Enden des jeweiligen ersten Rundrohrprofiles 4 jeweils entsprechende Verbindungen, d.h. hervorragende Stege 6, vorgesehen. Bei Ausführungsbeispielen, bei denen nur an einer Seite eine Verbindung erforderlich ist, ist selbstverständlich auch nur an einem Ende des ersten Rundrohrprofiles 4 eine entsprechende Endausbildung vorhanden.

### Bezugszeichenliste:

- 1: Tisch
- 2: Tischplatte
- 3: Tischgestell
- 4: Erstes Rundrohrprofil
- 4a: Freies Ende
- 5: Zweites Rundrohrprofil
- 5a: U-Schenkel
- 5b: Stegbereich
- 6: Stege
- 6a: Anlagefläche
- 7: Verbindungsbereich
- 8: Aufnahmeöffnung
- 8a: Anlagefläche
- 9: Quersteg
- 10: Erste Bohrung
- 11: Zweite Bohrung
- 12: Verbindungsschraube
- 13: Gewindebuchse
- 14: Einführöffnung
- 15: Spalt

## Patentansprüche

1. Anordnung aus wenigstens zwei winklig miteinander verbundenen Rundrohrprofilen (4), wobei an wenigstens einem Ende des ersten Rundrohrprofils (4) mehrere über das freie Ende (4a) hervorragende Stege (6) ausgebildet sind und dass das zweite Rundrohrprofil (5) wenigstens einen Verbindungsbereich (7) mit mehreren mit den Stegen (6) fluchtenden Aufnahmeöffnungen (8) aufweist, wobei angrenzend an das freie Ende (4a) innerhalb des ersten Rundrohrprofils (4) ein Quersteg (9) mit einer konzentrisch zur Längsachse des ersten Rundrohrprofils (4) angeordneten ersten Bohrung (10) angeordnet ist, wobei im Verbindungsbereich (7) des zweiten Rundrohrprofils (5) eine mit der ersten Bohrung (10) fluchtende zweite Bohrung (11) ausgespart ist, wobei die erste oder die zweite Bohrung (10,11) mit einem Innengewinde für eine durch die zweite oder die erste Bohrung (10,11) einführbare Verbindungsschraube (12) versehen ist, wobei die Stege (6) und die Aufnahmeöffnungen (8) zueinander komplementäre Anlageflächen (6a, 8a) aufweisen,
**dadurch gekennzeichnet,**
**dass** die Anlagefläche (6a) des jeweiligen Steges (6) als abgeschrägte Stirnfläche ausgebildet ist und dass die abgeschrägten Stirnflächen zweier benachbarter Stege (6) in Einsteckrichtung gesehen eine umgekehrte V-Form bilden, wodurch das Aufspreizen des ersten Rundrohrprofiles (4) verhindert wird.

2. Anordnung nach Anspruch 1,
**dadurch gekennzeichnet,**
**dass** das freie Ende (4a) des ersten Rundrohrprofils (4) angrenzend an die Stege (6) so ausgebildet ist, dass in Montagelage zwischen dem freien Ende (4a) und dem zweiten Rundrohrprofil (5) ein Spalt (15) besteht.

3. Anordnung nach Anspruch 1 oder 2,
**dadurch gekennzeichnet,**
**dass** die zweite Bohrung (11) mit dem Innengewinde versehen ist und im ersten Rundrohrprofil (4) angrenzend an den Quersteg (9) eine Einführöffnung (14) für die Verbindungsschraube (12) ausgebildet ist.

4. Anordnung nach Anspruch 1 oder 2,
**dadurch gekennzeichnet,**
**dass** die erste Bohrung (10) mit dem Innengewinde versehen und die zweite Bohrung (11) im zweiten Rundrohrprofil (5) als Durchgangsbohrung ausgebildet ist.

5. Anordnung nach einem oder mehreren der Ansprüche 1 bis 4,
**dadurch gekennzeichnet,**
**dass** das Innengewinde von einer in die erste oder zweite Bohrung (10,11) eingesetzten Gewindebuchse (13) gebildet ist.

6. Möbelstück mit wenigstens einer Anordnung nach einem oder mehreren der Ansprüche 1 bis 5.

## Claims

1. Arrangement of at least two angularly interconnected tubular profiles (4),
wherein at least on one end of the first tubular profile (4) several webs (6) are formed protruding beyond the free end (4a) and that the second tubular profile (5) has at least one connection region (7) with several reception openings (8) which are aligned with the webs (6), wherein adjoining on the free end (4a) within the first tubular profile (4) is arranged a transverse web (9) with a first bore (10) arranged concentrically to the longitudinal axis of the first tubular profile (4), wherein in the connection region (7) of the second tubular profile (5) a second bore (11) is cut out which aligns with the first bore (10), wherein the first or the second bore (10, 11) are equipped with an inner thread for a connecting screw (12) which can be introduced through the second or the first bore (10, 11), wherein the webs (6) and the reception openings (8) have abutment surfaces (6a, 8a) complementary to one another,
**characterized in that**
the abutment surface (6a) of the respective web (6) is formed as a chamfered end face and that the chamfered end faces of two adjacent webs (6) form a reverse V-shape, viewed in plug-in direction, whereby the widening of the first tubular profile (4) is prevented.

2. Arrangement according to claim 1,
**characterized in that**
the free end (4a) of the first tubular profile (4) adjoining on the webs (6) is formed such that in the mounted state there is a gap (15) between the free end (4a) and the second tubular profile (5).

3. Arrangement according to claim 1 or 2,
**characterized in that**
the second bore (11) is equipped with the inner thread and in the first tubular profile (4) adjoining on the transverse web (9) an introduction opening (14) is formed for the connecting screw (12).

4. Arrangement according to claim 1 or 2,
**characterized in that**
the first bore (10) is equipped with the inner thread and the second bore (11) is formed in the second tubular profile (5) as a through-bore.

5. Arrangement according to one or more of claims 1 to 4,
**characterized in that**
the inner thread is formed by a threaded bush (13) set into the first or second bore (10, 11).

6. Piece of furniture with at least one arrangement according to one or more of claims 1 to 5.

## Revendications

1. Agencement d'au moins deux profilés tubulaires ronds (4) connectés entre eux selon un angle,
dans lequel plusieurs entretoises (6) faisant saillie de l'extrémité libre (4a) sont formées au niveau d'au moins une extrémité du premier profilé tubulaire rond (4), et en ce que le second profilé tubulaire rond (5) présente au moins une zone de connexion (7) avec plusieurs ouvertures de réception (8) en alignement avec les entretoises (6), dans lequel une traverse (9) avec un premier alésage (10) disposé concentriquement par rapport à l'axe longitudinal du premier profilé tubulaire rond (4) est disposée de manière adjacente à l'extrémité libre (4a) à l'intérieur du premier profilé tubulaire rond (4), dans lequel un second alésage (11) aligné avec le premier alésage (10) est évidé dans la zone de connexion (7) du second profilé tubulaire rond (5), dans lequel le premier ou le second alésage (10, 11) est doté d'un filetage intérieur pour une vis de raccordement (12) pouvant être introduite à travers le second ou le premier alésage (10, 11), dans lequel les entretoises (6) et les ouvertures de réception (8) présentent des surfaces d'appui (6a, 8a) complémentaires les unes des autres,
**caractérisé en ce que**
la surface d'appui (6a) de l'entretoise (6) respective est conçue en tant que surface frontale biseautée et **en ce que** les surfaces frontales biseautées de deux entretoises (6) voisines forment une forme de V inversée, vu dans le sens d'insertion, moyennant quoi l'écartement du premier profilé tubulaire rond (4) est empêché.

2. Agencement selon la revendication 1,
**caractérisé en ce que**
l'extrémité libre (4a) du premier profilé tubulaire rond (4) est conçue de manière adjacente aux entretoises (6) de sorte que, en position de montage, une fente (15) soit constituée entre l'extrémité libre (4a) et le second profilé tubulaire rond (5).

3. Agencement selon la revendication 1 ou 2,
**caractérisé en ce que**
le second alésage (11) est doté du filetage intérieur et une ouverture d'introduction (14) pour la vis de raccordement (12) est formée dans le premier profilé tubulaire rond (4) adjacent à la traverse (9).

4. Agencement selon la revendication 1 ou 2,
**caractérisé en ce que**
le premier alésage (10) est doté du filetage intérieur et le second alésage (11) dans le second profilé tubulaire rond (5) est conçu en tant qu'alésage traversant.

5. Agencement selon une ou plusieurs des revendications 1 à 4,
**caractérisé en ce que**
le filetage intérieur est formé par une douille filetée (13) insérée dans le premier ou le second alésage (10, 11).

6. Meuble avec au moins un agencement selon une ou plusieurs des revendications 1 à 5.
